Europäisches Patentamt

European Patent Office

Office européen des brevets

(19)

(11) Numéro de publication : **0 435 798 A1**

# (12) DEMANDE DE BREVET EUROPEEN

(21) Numéro de dépôt : **90450019.6**

(22) Date de dépôt : **21.12.90**

(51) Int. Cl.$^5$ : **A01G 1/04**

(30) Priorité : **27.12.89 FR 8917517**

(43) Date de publication de la demande :
**03.07.91 Bulletin 91/27**

(84) Etats contractants désignés :
**AT BE CH DE DK ES FR GB GR IT LI LU NL SE**

(71) Demandeur : **SOCIETE COOPERATIVE
D'INTERET COLLECTIF AGRICOLE dite
HARAGUY
Lur Berri
F-64120 Saint Palais (FR)**

(72) Inventeur : **Bascougnet, Bernard
Cité Biskaretta
F-64120 Behasque (FR)**

(74) Mandataire : **Thébault, Jean-Louis
Cabinet Thébault S.A. 1 Allées de Chartres
F-33000 Bordeaux (FR)**

(54) **Procédé de culture de champignons, à partir d'un support de mycélium à base de rafles de mais, dispositif et support pour sa mise en oeuvre.**

(57)    - L'objet de l'invention est un procédé de culture de champignons, à partir d'un support de mycelium à base de rafles de maïs, caractérisé en ce qu'il consiste à traiter par des phases successives de broyage-séparation des rafles de maïs en vue de retenir uniquement des fragments de noyaux ligneux denses de granulométrie appropriée, à stériliser à température et hygrométrie contrôlées lesdits fragments à l'aide d'un agent stérilisant approprié, à humidifier les fragments avec de l'eau stérile, puis à les enrober d'un agent d'individualisation et d'augmentation du pH, et, enfin, à les conditionner de manière stérile en poches (19) en les inoculant à l'aide de mycélium.
    - Application à la culture des champignons.

# PROCEDE DE CULTURE DE CHAMPIGNONS, A PARTIR D'UN SUPPORT DE MYCELIUM A BASE DE RAFLES DE MAIS, DISPOSITIF ET SUPPORT DE CULTURE POUR SA MISE EN OEUVRE

La présente invention a trait à la culture de champignons.

La plupart des supports de mycélium traditionnels sont à base de grains de millet ou de seigle et nécessitent un processus long et complexe et donc coûteux.

Tout d'abord, il est nécessaire de cuire les grains afin d'obtenir un pourcentage d'humidité de 45%, la cuisson étant effectuée en autocuiseur en phase vapeur. Puis on refroidit les grains et on les enrobe avec une poudre de silicate de calcium, de platre, de talc, etc... afin de permettre à chaque grain d'être individualisé et d'augmenter le pH.

Les grains ainsi préparés subissent une stérilisation par passage à l'autoclave pendant deux heures à 120°C. Les grains sont ensuite refroidis puis inoculés, soit par du grain déjà inoculé, soit par des baguettes enrobées par le mycélium. Les grains sont enfin mis en poches pour être incubés par envahissement durant quinze jours à 25°C.

La présente invention vise à pallier les inconvénients des techniques actuelles de réalisation de supports de culture de champignons en proposant une nouvelle technique de culture de champignons mettant en oeuvre un nouveau support de mycélium et remarquable par son efficacité, sa rapidité et les meilleures garanties de stérilisation qu'elle permet d'offrir.

A cet effet, l'invention a pour objet un procédé de culture de champignons, à partir d'un support de mycelium à base de rafles de maïs, caractérisé en ce qu'il consiste à traiter par des phases successives de broyage-séparation des rafles de maïs en vue de retenir uniquement des fragments de noyaux ligneux denses de granulométrie appropriée, à stériliser à température et hygrométrie contrôlées lesdits fragments à l'aide d'un agent stérilisant approprié, à humidifier les fragments avec de l'eau stérile, puis à les enrober d'un agent d'individualisation et d'augmentation du pH, et, enfin, à les conditionner de manière stérile en poches en les inoculant à l'aide de mycélium.

Un tel procédé permet d'obtenir un support d'inoculation de mycélium présentant de nombreux et substantiels avantages en regard notamment des substrats à base de grains.

Du fait d'une densité et d'une granulométrie des éléments à base de noyaux denses de rafles de maïs inférieures à celles des grains de millet ou de seigle notamment, on dispose de points de lardage du mycélium plus important, d'une reprise et d'une implantation plus rapide du fait de la structure en forme d'éponge desdits noyaux, d'une très bonne pénétration du mycélium qui enrobe parfaitement les fragments.

Par ailleurs, on observe avec les noyaux de rafles une reprise et un départ du mycélium dans les douze heures, contre quanrante huit heures avec lesdits grains, ce qui procure un gain de temps considérable face aux compétiteurs fongiques qui peuvent se trouver dans le substrat.

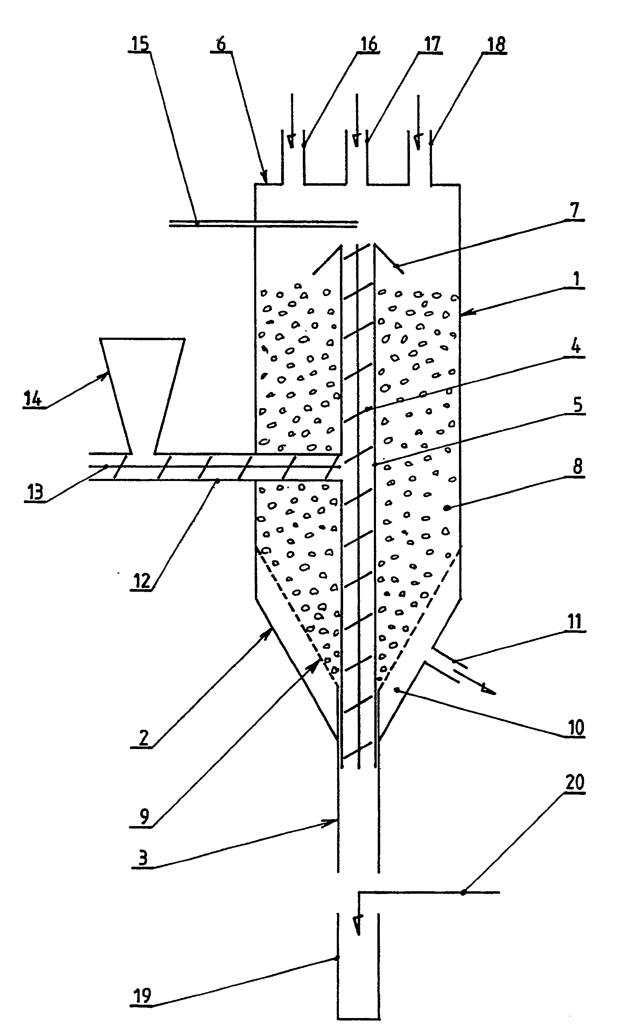

D'autres caractéristiques et avantages ressortiront de la description qui va suivre d'un mode de mise en oeuvre du procédé de l'invention, description donnée à titre d'exemple uniquement et en regard du dessin annexé sur lequel la figure unique illustre une installation propre à mettre en oeuvre le procédé de l'invention.

Sur cette figure unique, on a représenté en 1 une enceinte de stérilisation à double paroi en forme de cylindre d'axe vertical, munie en partie inférieure d'un cône 2 terminé par une goulotte de soutirage 3.

Dans l'enceinte 1, coaxialement à celle-ci, est agencé un transporteur à vis 4 dans un conduit 5 s'étendant depuis la goulotte 3 jusqu'à proximité du toit 6 de l'enceinte.

L'extrémité supérieure du conduit 5 est munie d'une collerette conique 7 de répartition.

L'espace entre les parois de l'enceinte 1 et le conduit 5 est rempli d'une masse 8 de fragments provenant, conformément à l'invention, des noyaux ligneux denses de rafles de maïs.

A l'intérieur de l'enceinte, à hauteur de la partie conique 2, une grille conique 9 est destinée à ménager entre la masse des produits 8 et le cône 2 un espace 10 susceptible d'être relié par une canalisation 11 à une source de vide non représentée.

A mi-hauteur du conduit 5 un conduit 12 équipé d'une vis transporteuse 13 est chargé d'acheminer des adjuvants contenus dans une trémie 14 à l'intérieur du conduit 5.

Au-dessus du conduit 5, dans l'enceinte 1 débouche une canalisation 15 d'amenée d'eau stérile.

Dans le toit 6 de l'enceinte débouchent une canalisation 16 d'introduction d'oxyde d'éthylène, une canalisation 17 d'introduction d'air stérile et une canalisation 18 d'introduction de vapeur d'eau.

En dessous de la goulotte de soutirage 3 est symbolisée une poche 19 de conditionnement du substrat de culture inoculé avec du mycélium liquide (20).

Le produit 8 introduit dans l'enceinte de stérilisation 1 est le produit d'une succession d'étapes de broyage-séparation, conformément à l'invention, de rafles de maïs.

A chaque étape de réduction, on sépare les parties légères (centre et périphérie de la rafle) des parties denses (noyaux ligneux).

Trois étapes de broyage-séparation sont par exemple suffisantes, le produit final, après nettoyage et tamisage, se présentant sous formes de granules ou de farines d'une granulométrie allant de quelques micromètres à 4 mm.

Conformément à l'invention on sélectionne dans ce produit final les fragments situés dans une plage de granulométrie d'environ 1000 à environ 2000 micromètres et, de préférence, dans la plage 1250-1800 micromètres.

Ce sont ces fragments qui constituent la masse de produit 8 traitée dans l'enceinte de stérilisation 1, le produit étant acheminé dans cette dernière par une conduite appropriée non représentée.

La stérilisation s'effectue en vrac sans manipulation, la masse 8 subissant uniquement un mouvement cyclique ascensionnel dans le conduit 5 grâce à la vis transporteuse 4, puis descendant dans l'intervalle entre conduit 5 et paroi de l'enceinte 1, avec reprise par la vis 4 des fragments de noyaux en partie inférieure du conduit 5 (muni à cet effet d'orifices de passage appropriés non représentés).

Plus précisément, le cycle de stérilisation s'opère, à titre d'exemple, de la manière suivante.

En une première étape, la charge (8) à stériliser est amenée à une température de l'ordre de 55°C (par introduction de vapeur d'eau par la conduite 18) et à une hygrométrie de l'ordre de 60 à 70% (par introduction d'eau stérile par la canalisation 15), le produit circulant dans l'enceinte grâce à la vis 4 acheminant le produit à la partie supérieure de l'enceinte 1.

Puis, un vide de l'ordre d'une centaine de millibars est appliqué dans l'espace 10 et maintenu quelques minutes. De l'oxyde d'éthylène est alors introduit par la conduite 16 pour mettre l'enceinte sous une pression de quelques bars qui est maintenue durant quelques heures. Enfin le vide est fait à nouveau dans l'espace 10 et l'enceinte est remise à la pression atmosphérique.

La phase de stérilisation proprement dite est terminée. Elle est suivie d'une étape de désorption de l'oxyde d'éthylène par circulation d'air stérile (provenant de la conduite 17 puis évacué par la conduite 11) à environ 45°C pendant quelques heures.

Ensuite, la masse 8 est humidifiée au degré souhaité à l'aide d'eau stérile fournie par la canalisation 15 et un enrobage des fragments de noyaux est opéré, par exemple à l'aide de silicate de calcium, éventuellement supplémenté, grâce à la vis 13.

Pendant les différentes étapes ci-dessus, y compris la stérilisation, la vis 4 fonctionne en permanence pour faire circuler le produit en l'acheminant en partie haute de l'enceinte.

La dernière phase consiste à soutirer le produit à la base de l'enceinte en actionnant la vis 4 en sens inverse pour remplir des poches 19 dans lequelles sera inoculé, de manière dosée, du mycélium liquide.

Les conditions contrôlées de température et d'hygrométrie du produit 8 en phase de stérilisation permettent d'obtenir une réaction d'alkylation irréversible conférant à l'oxyde d'éthylène des propriétés destructrices particulièrement efficaces sur les cellules vivantes. On pourrait bien entendu utiliser un autre agent stérilisant tel que le formaldéhyde par exemple.

Un tel procédé permet une stérilisation en vrac, sans manipulation ou intervention humaine, toutes les étapes du processus pouvant être automatisées. Il consomme peu d'énergie car les températures opératoires sont faibles. Les traitements d'enrobage et d'humidification s'effectuent à l'intérieur de l'enceinte 1. Enfin, la mise en oeuvre du procédé, aussi bien pour ce qui concerne la préparation des noyaux de rafles de maïs que la stérilisation, est aisée et facilement répétitible, la reproduction des mêmes paramètres étant très fiable.

Le support de culture de champignons obtenu conformément à l'invention présente de remarquables propriétés, du fait notamment de la nature et des caractéristiques physico-chimiques des fragments constituant le support.

Les fragments de noyaux de rafles de maïs ont une densité (de l'ordre de 0,5) inférieure à celui (de l'ordre de 0,9) des grains de millet ou de seigle, ce qui assure un point de lardage très important.

La granulométrie des fragments de noyaux est inférieure à celle (de l'ordre de 3 mm) desdits grains et assure, conjointement à la structure en forme d'éponge des fragments de rafle, de très bonnes dispersion et pénétration du mycélium et un très bon enrobage. Ceci facilite et améliore les opérations ultérieures de délitage ou séparation du mycélium.

Enfin, on observe avec le support de l'invention une reprise et un départ du mycélium dans les douze heures contre quarante huit heures avec les grains de millet ou seigle, d'où un gain de temps considérable face aux compétiteurs fongiques qui peuvent se trouver dans le substrat.

Le mycélium est de préférence préparé en milieu liquide selon les techniques connues, mais on pourrait inoculer le support dans les poches 19 suivant d'autres techniques également connues.

**Revendications**

1. Procédé de culture de champignons, à partir d'un support de mycelium à base de rafles de maïs, caractérisé en ce qu'il consiste à traiter par des phases successives de broyage-séparation des rafles de maïs en vue de retenir uniquement des fragments de noyaux ligneux denses de granulométrie appropriée, à stériliser à température et hygrométrie contrôlées lesdits fragments à l'aide d'un agent stérilisant approprié, à humidifier les fragments avec de l'eau stérile, puis à les enrober d'un agent d'individualisation et d'augmentation du pH, et, enfin, à les conditionner de manière stérile en poches (19) en les inoculant à l'aide de mycélium.

2. Procédé suivant la revendication 1, caractérisé en ce que l'on sélectionne les fragments de noyaux ligneux denses d'une granulométrie comprise entre 1000 et 2000 micromètres et, de préférence, entre 1250 et 1800 micromètres.

3. Procédé suivant la revendication 1 ou 2, caractérisé en ce que la stérilisation s'effectue par alkylation à partir d'oxyde d'éthylène ou de formaldéhyde, dans des conditions de température et d'hygrométrie contrôlées.

4. Procédé suivant l'une des revendications 1 à 3, caractérisé en ce qu'au cours de l'enrobage lesdits fragments sont supplémentés.

5. Procédé suivant l'une des revendications 1 à 4, caractérisé en ce que le mycélium d'inoculation est préparé sous forme liquide.

6. Dispositif pour la mise en oeuvre du procédé selon l'une des revendications 1 à 5, caractérisé en ce qu'il comprend une enceinte de stérilisation (1) d'axe vertical munie, dans sa partie centrale, d'une vis transporteuse (4) verticale de circulation et extraction du produit (8) à traiter, dans sa partie supérieure, de conduits (15 à 18) d'introduction des divers agents et, en partie inférieure, d'une part, d'une trémie d'évacuation (2, 3) et, d'autre part, d'un espace (10) entre produit (8) et enceinte (1) susceptible d'être mis en dépression.

7. Dispositif suivant la revendication 6, caractérisé en ce qu'il comporte, en outre, une vis transporteuse extérieure (13) reliée à la vis transporteuse (4) de l'enceinte (1) et assurant l'introduction dans cette dernière d'adjuvants.

8. Support de culture obtenu conformément au procédé selon l'une quelconque des revendications 1 à 5.

EP 0 435 798 A1

Office européen
des brevets

**RAPPORT DE RECHERCHE EUROPEENNE**

Numero de la demande

EP  90 45 0019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 445 649  (CHAPUIS)<br>* Le document en entier *<br>--- | 1,3,8 | A 01 G   1/04 |
| A | BE-A-  904 994  (COOPEX EXPORTARU)<br>* Page 9, ligne 25 - page 10, ligne 24;<br>page 12, ligne 21 - page 17, ligne 13;<br>figure 1 *<br>--- | 1,3,6,8 | |
| A | FR-A-2 113 003  (STOLLER RESEARCH)<br>* Page 3, ligne 9 - page 4, ligne 35 *<br>--- | 1,8 | |
| A | DE-A-1 632 919<br>(MAX-PLANCK-GESELLSCHAFT)<br>* Page 3, dernier alinéa - page 4,<br>alinéa 3 *<br>--- | 3 | |
| A | FR-A-1 383 075  (ROYAL CHAMPIGNON)<br>* Le document en entier *<br>----- | 5 | |

| | | | DOMAINES TECHNIQUES RECHERCHES (Int. Cl.5) |
|---|---|---|---|
| | | | A 01 G |

Le présent rapport a été établi pour toutes les revendications

| Lieu de la recherche | Date d'achèvement de la recherche | Examinateur |
|---|---|---|
| LA HAYE | 02-04-1991 | HERYGERS J.J. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P0402)